Europäisches Patentamt

European Patent Office

Office européen des brevets

(11) Veröffentlichungsnummer : **0 064 649**
B1

(12) **EUROPÄISCHE PATENTSCHRIFT**

(45) Veröffentlichungstag der Patentschrift :
12.11.86

(51) Int. Cl.⁴ : **C 23 D   5/02**, C 03 C   8/14

(21) Anmeldenummer : 82103487.3

(22) Anmeldetag : 24.04.82

(54) Emailschlicker und Verfahren zur Zwei- und Mehrschichtemaillierung in einem Brand.

(30) Priorität : 05.05.81 DE 3117706
13.03.82 DE 3209140

(43) Veröffentlichungstag der Anmeldung :
17.11.82 Patentblatt 82/46

(45) Bekanntmachung des Hinweises auf die Patenterteilung : 12.11.86 Patentblatt 86/46

(84) Benannte Vertragsstaaten :
AT BE CH DE FR GB IT LI NL SE

(56) Entgegenhaltungen :
EP-A- 0 018 559
CH-A-   562 174
DE-A- 2 634 843
DE-B- 1 217 736
DE-B- 1 217 737
FR-A- 2 419 983
US-A- 1 833 087
US-A- 3 906 124

(73) Patentinhaber : BAYER AG
Konzernverwaltung RP Patentabteilung
D-5090 Leverkusen 1 Bayerwerk (DE)

(72) Erfinder : Krist, Otto
Grosshurdener Berg 8
D-5063 Overath (DE)
Erfinder : Drave, Heinz, Dr. c/o Mobay Chemical Corporation
Pemco Products 5601 Eastern Avenue
Baltimore Maryland 21224 (US)
Erfinder : Luypaert, Jozef
Av. des Meuniers 21
B-1160 Brüssel (BE)

## Beschreibung

Die Erfindung betrifft einen Emailschlicker mit Zusatzstoffen und ein Verfahren zur Zwei- und Mehrschichtemaillierung in einem Brand, wobei dem zuerst auf das Metall aufzutragendem Grundemailschlicker bestimmte organische Substanzen beigemengt werden, die ohne nennenswerte Beeinflussung der Schlickerrheologie und der Benetzbarkeit sowohl des Metalls als auch des als nächste Schicht (oder Zwischenschicht) aufgetragenen Zwischen- bzw. Deckemails eine Durchmischung der verschiedenen Emailschichten während des Einbrandes wirksam verhindern.

Bei den konventionellen Zwei- bzw. Mehrschichtemaillierverfahren wird in einem ersten Schritt zunächst ein Grundemailschlicker aufgetragen, getrocknet und anschließend eingebrannt. In einem zweiten Schritt wird auf die eingebrannte Grundemailschicht ein weiterer Zwischen- oder auch Deckemailschlicker aufgebracht, wiederum getrocknet und anschließend eingebrannt. Auf diese Weise lassen sich im Prinzip Vielfachschichten erzeugen, von denen jede Einzelschicht separat die ihr zugewiesene Aufgabe wie z. B. Haftung, Abdeckung der Eigenfarbe des zu emaillierenden Metalls, Farbigkeit der Emailschicht und physikalischchemische Oberflächeneigenschaften zu übernehmen vermag.

Der Nachteil des konventionellen Mehrschichtemaillierverfahrens besteht darin, daß nach jedem Schlickerauftrag getrocknet und eingebrannt werden muß.

Diese Arbeitsweise bedeutet hohen Energieaufwand und begrenzte Einbrenn-Ofenkapazität.

Demgegenüber ermöglicht das Zwei-Schicht/Ein-Brand-Verfahren oder in noch stärkerem Maße ein Mehrfachschicht-Ein-Brand-Verfahren, Energie einzusparen und gleichzeitig die vorhandene Einbrenn-Ofenkapazität effektiver zu nutzen, indem ein und derselbe Gegenstand nur einmal den Ofen passieren muß.

Derartige energiesparende Zweischichtemaillierungen in einem Brand sind aus der US-Patentschrift 2 602 758, der Deutschen Auslegeschrift 1 621 405 und der Deutschen Offenlegungsschrift 2 538 601 bekannt.

In der US-Patentschrift 2 602 758 wird als wesentliches Merkmal der Erfindung die Abstimmung von Grund- und Deckemail auf gleiche Einbrenntemperatur herausgestellt. Diese Abstimmung erfolgt durch Schichtdickenveränderung, indem die Grundemailschicht sehr dünn, die Deckemailschicht in konventioneller Schichtstärke eingebrannt wird.

Dieses Verfahren hat den Nachteil, daß die geforderte, sehr dünne Grundemailschicht von einigermaßen gleicher Schichtstärke nur durch komplizierte und schwierige Auftragsverfahren bei gleichzeitig größter Sorgfalt während des Auftrages erhalten wird. In der rauhen Betriebswirklichkeit eines Emaillierbetriebes hat dieses Verfahren daher kaum Eingang in die Praxis gefunden : Ferner ist dieses Verfahren auf definiert ausgewählte, spezielle, emaillierfähige Stahlblechqualitäten angewiesen.

In der DT-AS 1 621 405 ist ein weiteres Verfahren zur Zweischichtemaillierung in einem Brand für Weißemaillierungen beschrieben, wonach dem Grundemailschlicker Alkali-aluminate und Alkali-, Erdalkali- oder Schwermetallphosphate zugesetzt werden.

Nach dem Auftragen und anschließendem Trocknen zum Grundemailbisquit wird ein Titanweißemailschlicker aufgetragen, der wiederum getrocknet wird. Die beiden Emailbisquitschichten werden anschließend in einem Brennschritt eingebrannt.

Obwohl mit diesem Verfahren teilweise ausgezeichnete Emaillierungen möglich sind, so hat dieses Verfahren doch den Nachteil, daß durch die hohen Aluminat- und Phosphatzusätze die Rheologie des Grundemailschlickers in hohem Maße beeinflußt wird, was zu Schwierigkeiten bei den verschiedenen Schlickerauftragsverfahren (Spritzen, Tauchen, Begießen) führt.

In der Deutschen Offenlegungsschrift 2 538 601 wird ein weiteres Zwei-Schicht/Ein-Brand-Verfahren beschrieben, in dem vor dem Auftrag des Deckemailschlickers der vorgetrocknete Grundemailbisquit durch Imprägnierungsmittel auf Siliconbasis gegen die Wasseraufnahme aus dem Deckemail geschützt wird. Diese hydrophobe Imprägnierung soll einerseits eine Quellung des Grundemailbisquit beim Auftrag des wäßrigen Deckemailschlickers verhindern, andererseits eine Korrosion des Blechunterlage vermeiden. Die genannten Imprägnierungsmittel können sowohl als Mühlenzusatz verarbeitet werden als auch auf den getrockneten Grundemailbisquit, in leichtflüchtigen, organischen Lösungsmitteln gelöst, aufgespritzt werden. Neben der Feuergefährlichkeit der Lösungsmittel beim Emaillierprozeß hat dieses Verfahren einen prinzipiellen Nachteil :

Die Imprägnierschicht verhindert zwar das Eindringen von Wasser aus dem Deckemailschlicker in die Grundemailschicht, andererseits behindert sie in der gleichen Weise und Stärke den Austritt von Wasser aus dem sogenannten « trockenen » Grundemailbisquit.

Dieser enthält nämlich selbst nach intensiver Trocknung noch chemisch gebundenes Wasser in Form von OH-Gruppen an Emailfritteteilchen oder an Metallhydroxiden oder in Form von schwerverdampfbarem Kristallwasser gebunden an Ton und andere Mühlenzusätze.

Die Behinderung des Austritts von Wasser aus dem Grundemailbisquit kann sich, besonders beim Einbrand dieses Systems, in Form fehlerhafter Emaillierungen bemerkbar machen, je nachdem, wie die Wasserundurchlässigkeit der Imprägnierschicht während des Aufheizens nachläßt bzw. ab welcher Temperatur sich das Imprägnierungsmittel zersetzt. Die Zersetzungsprodukte der Imprägnierungsmittel

können weiterhin durch Polymerisation oder Verbrennung während des Einbrandes zu unerwünschten Nebenreaktionen und Emaillierfehlern führen.

Aus der DE-A 2 634 843 sind Dekoremails bekannt, die man aus einer Polyethylenglykolsuspension herstellen kann. Dabei werden spezielle Emails, sogenannte Reaktionsemails, eingesetzt, die während des Einbrands miteinander reagieren. Besonders gute Reaktionseffekte werden mit PbO-haltigen Fritten erzielt. Zur Herstellung konventioneller Zwei- und Mehrschichtemaillierungen in einem Brand ist dieses Verfahren jedoch nicht geeignet.

Überraschenderweise wurde nun ein Verfahren gefunden, welches die Nachteile der o. a. Verfahren vermeidet und universell auf alle bekannten Emailfritten, die nach konventioneller Zwei- und Mehrfachbrandmethode verarbeitbar sind, angewendet werden kann.

Gegenstand der vorliegenden Erfindung ist ein Verfahren zur Zwei- und Mehrschichtemaillierung in einem Brand durch aufeinanderfolgenden Naßauftrag von wäßrigen Grund-, gegebenenfalls wäßrigen Zwischen- und Deckemailschlickern und anschließendem gemeinsamem Einbrand, dadurch gekennzeichnet, daß bei der Grund- und gegebenenfalls Zwischenemailschlickerherstellung Saccharide und-/oder deren Oxidations- und/oder Reduktionsprodukte und/oder Polyethylenglykol in einer Menge von 0,01 bis 3 Gew.-% — bezogen auf den Emailschlicker — zugegeben werden, wobei die Zusatzstoffe bis zu 50, vorzugsweise bis zu 25, Kohlenstoffatome pro Molekühl aufweisen. Die Zusatzstoffe sollen im wäßrigalkalischen Emailschlicker zumindest teilweise löslich sein und keine hydrophobierende Wirkung ausüben.

Als Polyethylenglykole können erfindungsgemäß Diethylenglykol, Trieethylenglykol, usw. bis zu Polyethylenglykol mit der genannten maximalen Anzahl von Kohlenstoffatomen pro Molekül eingesetzt werden.

Vorzugsweise sollen die erfindungsgemäßen Zusatzstoffe mehr als 4, besonders bevorzugt mehr als 5 Kohlenstoffatome pro Molekül aufweisen.

Besonders bevorzugt soll mindestens ein Teil der Zusatzstoffe, z. B. 30 %, besser 50 %, zwischen 6 und 20 Kohlenstoffatome pro Molekül aufweisen.

Besonders bevorzugt werden die Zusatzstoffe in Mengen von 0,01 bis 0,5 Gew.-%, bezogen auf den Emailschlicker, eingesetzt.

Die Zusatzstoffe können dem Email bei der trockenen oder nassen Vermahlung zugegeben werden. Es ist aber auch möglich, die Zusatzstoffe in wäßriger oder alkoholischer Lösung auf den bereits aufgetragenen Emailschlicker, gegebenenfalls nach Zwischentrocknung, vor Auftrag des nächsten Schlickers, z. B. durch Sprühen, aufzubringen.

Besonders bevorzugt werden die Zusatzstoffe bereits vor der Vermahlung auf die ungemahlene Emailfritte aufgebracht. Auf diese Weise kann die Dosierung des Zusatzmittels bereits durch den Emailhersteller erfolgen. Es ist somit eine an die spezielle Zusammensetzung der Rohfritte angepaßte Auswahl der Zusatzstoffe und deren Menge möglich, so daß der relativ rauhe Emaillierbetrieb hiervon entlastet ist. Ferner ist der Einsatz weniger wasserlöslicher Zusatzstoffe auch bei nasser Vermahlung der Fritte möglich.

Gegenstand der vorliegenden Erfindung ist demnach auch eine Emailfritte zur Zwei- oder Mehrschichtemaillierung in einem Brand, die dadurch gekennzeichnet ist, daß die Fritte auf der Oberfläche zumindest teilweise mit Sacchariden und/oder deren Oxidations-, Reduktionsprodukten und/oder Polyethylenglykol in Mengen von bis zu 3 Gew.-% — bezogen auf die Fritte — beschichtet ist, wobei die Zusatzstoffe bis zu 50 Kohlenstoffatome pro Molekül aufweisen.

Vorzugsweise werden die Zusatzstoffe in Mengen von 0,006 bis 1,8 Gew.-%, besonders bevorzugt 0,006 bis 0,3 Gew.-%, bezogen auf die Fritte, aufgebracht.

Die erfindungsgemäße Fritte kann im Emaillierbetrieb in gewohnter Weise durch Mahlen und Zugabe üblicher weiterer Schlickerbestandteile zu einem auftragsfähigen Schlicker verarbeitet werden.

Der Grundemailschlicker wird nach üblichen Auftragsmethoden auf den metallischen Werkstoff aufgetragen. Nach kurzer Zeit kann ohne Zwischentrocknung ein weiterer Zwischen- oder Deckemailschlicker aufgetragen werden. Beim Auftragen einer Zwischenschicht muß auch dem Zwischenschlicker einer der erfindungsgemäßen Zusatzstoffe beigegeben werden, bzw. zur Herstellung des Zwischenschichtschlickers eine erfindungsgemäße Fritte eingesetzt werden. Auch der Deckemailschlicker kann ohne Nachteil die erfindungsgemäßen Zusätze enthalten. Dies ist z. B. dann zweckmäßig, wenn auf die Deckschicht eine diese nur teilweise überdeckende weitere z. B. dekorative farbige Schicht aufgebracht werden soll.

Nach dem gemeinsamen Trocknen aller aufgetragenen Schichten wird bei üblichen Temperaturen eingebrannt. Das Emaillierergebnis (Haftung, Oberflächeneigenschaften, usw.) ist vollständig vergleichbar mit den bei konventioneller Emaillierung erreichbaren Qualitäten.

Gegenüber den bekannten Verfahren der Zwei-Schicht/Ein-Brand-Emaillierung weist das erfindungsgemäße Verfahren folgende Vorteile auf :

1. Der Zusatz definierter Mengen an Zusatzstoffen beeinflußt die Fließeigenschaften der Emailschlicker (Rheologie) praktisch nicht.

2. Es kann mit Emailschlickern üblicher Mahlfeinheit gearbeitet werden.

3. Eine Zwischentrocknung des zuerst aufgetragenen Grundemailschlickers ist nur in Ausnahmefällen (bei größeren Schichtstärken) notwendig.

4. Durch die nicht hydrophobierende Wirkung der Zusatzmittel kann beim Einbrand im Gegensatz zu Imprägnierungsmitteln auch das Restwasser ohne Behinderung aus dem getrockneten Emailbisquit entweichen.

5. Beim Einbrand treten praktisch keine schädlichen Reaktionsprodukte des Zusatzmittels in störender Weise auf, da das Zusatzmittel je nach Polymerisationsgrad bereits einen großen Teil des für ihre vollständige Verbrennung notwendigen Sauerstoffs im Molekül enthalten ; ebenso wird auf diese Weise eine übermäßige Reduktion von Metalloxiden des Emails durch die organischen Zusätze, die ja letztlich vollständig verbrennen müssen, vermieden.

Das erfindungsgemäße Verfahren ist um so überraschender als bisher jedem Emailfachmann Kohlenhydrate im Bisquit eines zu emaillierenden Gegenstandes als gefährliche Fehlerquelle für das Emaillierergebnis bekannt sind ; man spricht von Cola- bzw. Limonadeflecken, die Farbfehler verursachen ; andererseits werden vom Personal des Emaillierbetriebes beim Umhängen der zu emaillierenden Ware von der Trocknerkette auf die Brennkette Handschuhe getragen, um Fingerabdrücke, hervorgerufen durch Handschweiß oder Speisereste, auf dem getrockneten Emailbisquit zu vermeiden ; solche Fingerabdrücke führen zu fehlerhaften Emaillierungen.

Die Erfindung ist nicht auf Emails im klassischen Sinne beschränkt, sondern ist auch auf verwandte Systeme, wie z. B. Cermets, anwendbar.

Das erfindungsgemäße Verfahren läßt sich in der oben beschriebenen Form im allgemeinen für die üblichen Blechemaillierungen mit hervorragenden Ergebnissen anwenden. Es wurde jedoch gefunden, daß die Variationsmöglichkeiten für die übrigen Parameter wie die Blechqualität, die Blechvorbehandlung, die Schlickereinstellung durch die üblichen weiteren Schlickerzusätze und die Einbrandbedingungen erheblich erweitert werden können, wenn das Grundemailpulver nach dem Mahlen eine bestimmte Teilchengrößenverteilung aufweist.

Vorzugsweise soll daher die Teilchengröße des Emailpulvers unter 70 μm liegen. Besonders bevorzugt werden Teilchengrößen unter 60 μm eingesetzt, die durch Mahlen der Fritte, bis der Siebrückstand auf einem Sieb mit 10 000 Maschen/cm² (244 mesh) maximal 3 Gew.-% beträgt, und durch Abtrennen des Rückstands erhalten werden.

Hervorragend geeignete Teilchengrößenverteilungen sind durch folgende Parameter gekennzeichnet :

100 Gew.-% kleiner als 60 μm, und mindestens 75 Gew.-%, vorzugsweise mindestens 85 Gew.-%, größer als 20 μm, und mindestens 50 Gew.-%, vorzugsweise mindestens 70 Gew.-% kleiner als 50 μm.

Eine weitere Möglichkeit zur Herabsetzung der an die Blechqualität und Blechvorbehandlung zu stellenden Anforderungen besteht in der Auswahl besonders geeigneter Zusammensetzungen der Rohfritten. Es wurde gefunden, daß bei Einsatz der nachfolgend näher beschriebenen Frittenzusammensetzungen sogar Gußeisen und nicht entkohlte Stähle nach dem erfindungsgemäßen 2-Schicht-1-Brand-Verfahren fehlerfrei emailliert werden können.

Bevorzugt weisen die erfindungsgemäß für die Grundemailschicht einzusetzenden Rohfritten folgende Zusammensetzung auf :

| | | |
|---|---|---|
| $SiO_2$ | 30-50 Gew.-% | Summe 33-53 Gew.-% |
| $ZrO_2$ | 0- 8 Gew.-% | |
| $B_2O_3$ | 5-21 Gew.-% | |
| BaO | 14-25 Gew.-% | Summe 33-40 Gew.-% |
| ZnO | 0- 5 Gew.-% | |
| F | 0- 4 Gew.-% | |
| Alkalioxide | 10-15 Gew.-% | |
| Haftoxide | 1- 4 Gew.-% | |
| CaO | 0- 5 Gew.-% | |
| SrO | 0- 5 Gew.-% | |
| $TiO_2$ | 0- 5 Gew.-% | Summe  0- 7 Gew.-% |
| $Fe_2O_3$ | 0- 5 Gew.-% | |
| $P_2O_5$ | 0- 2 Gew.-% | |

Als Haftoxide werden üblicherweise CoO, NiO, MnO und/oder CuO eingesetzt.

Die Alkalioxide enthalten vorzugsweise maximal 80 % $Na_2O$ und darüber hinaus $Li_2O$ und/oder $K_2O$.

Die Summe der obengenannten Gew.-%-Angaben soll mindestens 98, vorzugsweise 100, betragen, wobei weitere Bestandteile gegebenenfalls in solchen Mengen vorhanden sein können, wie diese als unvermeidliche Bestandteile der eingesetzten Rohstoffe in die Rohfritte eingeführt werden.

Besonders bevorzugt werden die Rohfritten für das erfindungsgemäße Verfahren mit den erfindungs-

gemäßen Zusatzstoffen oberflächenbeschichtet.

Da üblicherweise Frittengemische für die Herstellung des Grundemailschlickers eingesetzt werden, sollen die erfindungsgemäß bevorzugten Fritten mindestens 50 Gew.-%, vorzugsweise mindestens 60 Gew.-%, der Frittenmischung ausmachen.

Mit der erfindungsgemäß bevorzugten Kombination aus mit den erfindungsgemäßen Zusatzstoffen beschichteter bevorzugter Fritte und anschließender Einstellung der erfindungsgemäßen Teilchengrößenverteilung steht ein System für ein äußerst robustes 2-Schicht-1-Brand-Emaillierverfahren zur Verfügung, das bezüglich seiner Anfälligkeit gegen schwankende Substratqualitäten und deren Vorbehandlung sowie Schlickereinstellung und Brandbedingungen üblichen Mehrfach-Brand-Emaillierverfahren überlegen ist. Selbst die im allgemeinen relativ schwierigen Kantenemaillierungen stellen kein Problem dar.

Die Erfindung wird durch die nachfolgenden Beispiele weiter erläutert :

## Beispiele 1 bis 6

Aus den Grundemailfritten A, B, C und D der chemischen Analyse gemäß Tabelle 1 wurden die Grundemailschlicker Nr. 1 bis Nr. 6 gemäß Tabelle 2 hergestellt. Dabei wurden Frittenbestandteile, Mühlenzusätze und Zusatzstoffe in einer Kugelmühle bis zu einer Mahlfeinheit, die durch einen Rückstand von weniger als 5 % auf einem Sieb von 3 600 Maschen/cm$^2$ definiert ist, gemahlen. Die Schlicker wurden dann auf je ein durch ein übliches Beizverfahren vorbehandeltes Stahlblech aufgespritzt.

Ein Weißemailschlicker (Beispiele 1-6) wurde durch Mahlen einer Fritte der chemischen Zusammensetzung 44 % $SiO_2$, 17 % $B_2O_3$, 7,5 % $Na_2O$, 7,8 % $K_2O$, 1 % $Li_2O$, 1,2 % $ZrO_2$, 19 % $TiO_2$, 1,2 % $P_2O_5$ und 1,3 % F mit Mühlenzusätzen von 3,5 Teilen Ton, 1,5 Teilen hochdisperses $SiO_2$, 0,3 Teilen $NaAlO_2$, 0,2 Teilen $K_2CO_3$ und 45 Teilen Wasser auf 100 Teile Fritte gewonnen (Gew.-% und Gew.-Teile).

Der Weißemailschlicker wurde auf die mit den 6 Grundemailschlickern beschichteten Metallplatten aufgetragen, danach getrocknet. Der gemeinsame Einbrand erfolgte in üblicher Weise 3 Minuten lang bei 820 °C.

## Tabelle 1

| Zusammensetzung | Fritte | | | |
| --- | --- | --- | --- | --- |
| | A | B | C | D |
| $SiO_2$ | 48 | 46 | 37 | 47 |
| $Al_2O_3$ | 6 | 7 | 4 | 4 |
| $B_2O_3$ | 16 | 15 | 19 | 6 |
| $Na_2O$ | 19 | 14 | 15 | 18 |
| $K_2O$ | 4 | 3 | 4 | 2 |
| CaO | 5,2 | 6,7 | 10 | 10 |
| NiO | 1,3 | 0,4 | 1,5 | 1 |
| CoO | 0,3 | 0,4 | 0,5 | 0,2 |
| MnO | — | — | — | 1 |
| $P_2O_5$ | — | 2,1 | 0,6 | 2 |
| BaO | — | 1,4 | 4 | 6 |
| $Fe_2O_3$ | — | 2 | — | 0,4 |
| CuO | — | — | 0,2 | — |
| F$^-$ | 1,2 | 2 | 4,2 | 6,2 |

(Angaben in Gew.-Teilen)

## Tabelle 2

| | Grundemailschlicker Nr. | | | | | |
| --- | --- | --- | --- | --- | --- | --- |
| | 1 | 2 | 3 | 4 | 5 | 6 |
| Fritte : A | 25 | 25 | 20 | 20 | 30 | 30 |
| B | 25 | 25 | 20 | 20 | 40 | 30 |
| C | 50 | 50 | 40 | 40 | 30 | 40 |
| D | — | — | 20 | 20 | — | — |
| Mühlenzusätze : | | | | | | |
| $SiO_2$ (Quarz) | 15 | 10 | 15 | 10 | — | 10 |
| Ton | 3 | 6 | — | 5 | 7 | 7 |
| $NaNO_2$ | 0,1 | 0,1 | 0,1 | 0,1 | 0,1 | 0,1 |

**0 064 649**

(Fortsetzung)

| | Grundemailschlicker Nr. | | | | | |
|---|---|---|---|---|---|---|
| | 1 | 2 | 3 | 4 | 5 | 6 |
| $NaAlO_2$ | 0,3 | — | 0,8 | 0,3 | 0,2 | 0,2 |
| $Na_4B_2O_7 . 10\ H_2O$ | 0,1 | 0,3 | 0,1 | — | 0,1 | 0,2 |
| K-Feldspat | — | 5 | — | — | 5 | — |
| Ca-Silikathydrat | 0,5 | — | 0,5 | — | — | — |
| $H_2O$ | 45 | 50 | 40 | 45 | 45 | 50 |
| Beispiele für erfindungsgemäße Zusätze : Mannit | 0,03 | 0,2 | 0,1 | — | 2 | — |
| $\beta$-D-Fructofuranosyl-$\alpha$-D-gluco-pyranosid | — | 1 | — | 0,5 | — | — |
| Dextrin | — | 0,2 | 2 | — | — | — |
| Polyethylenglykol, MG 400 | — | — | — | — | — | 0,2 |

(Angaben in Gew.-Teilen)

## Beispiele 7 bis 18

Ein Semiopakemailschlicker wurde unter Verwendung einer Fritte der Zusammensetzung 45 % $SiO_2$, 10 % $Al_2O_3$, 14,5 % $B_2O_3$, 4,9 % $TiO_2$, 12 % $Na_2O$, 4,3 % $K_2O$, 4,1 % CaO und 5,2 % F unter Zugabe von 4 Teilen Ton, 0,5 Teilen $K_2CO_3$, 40 Teilen Wasser und 5 Teilen Farbkörper auf 100 Teile Fritte gemahlen. Als Farbkörper wurden verschiedene handelsübliche Rutil- und/oder Spinellfarbkörper eingesetzt. Die Schlicker wurden auf je 6 mit Grundemailschlicker beschichtete Metallplatten nach Beispielen 1 bis 6 aufgebracht, getrocknet und eingebrannt.

## Beispiele 19 bis 24

In einem Transparentemailschlicker wurden unter Verwendung einer Fritte der Zusammensetzung 53 % $SiO_2$, 10,3 % $Al_2O_3$, 14,5 % $B_2O_3$, 12 % $Na_2O$, 4,3 % $K_2O$, 4,1 % CaO und 1,8 % F unter Zugabe von 4 Teilen Ton, 0,3 % $K_2CO_3$ und 40 Teilen Wasser und 4 Teilen verschiedener handelsüblicher Silikatfarbkörper, Cadmiumsulfid- bzw. Cadmiumsulfosolenid-Farbkörper eingesetzt.

Die Schlicker wurden auf mit Grundemailschlicker beschichtete Metallplatten nach Beispielen 1 bis 6 aufgebracht und entsprechend getrocknet und eingebrannt.

## Beispiel 25

Auf dem Grundemailbisquit gemäß Beispiel 5 unter Verwendung des Schlickers Nr. 5 gemäß Tabelle 2 wurde ein Zwischenweiß mit 0,3 Teilen Mannit als erfindungsgemäßen Zusatz aufgetragen und getrocknet. Auf diesem Zweischichtbisquit wurde dann ein Majolikaschlicker mit einer Frittenzusammensetzung wie folgt gegeben : 46 % $SiO_2$, 3 % $Al_2O_3$, 14 % $B_2O_3$, 19 % $Na_2O$, 3 % $K_2O$, 2 % MnO, 7 % $Fe_2O_3$, 4 % $TiO_2$, 2 % F. Anschließend wurde getrocknet und gemeinsam eingebrannt.

Die Emaillierungen 1 bis 25 waren rißfrei und zeigten keinerlei Blasenbildung. Durch Schlagversuche konnte kein Abplatzen von der Stahlblechgrundlage beobachtet werden. Es wurden keine Emaillierfehler wie Nadelstiche oder schwarze Punkte beobachtet ; die Emaillierungen waren einwandfrei.

## Beispiel 26

Es wird ein Grundemail der Zusammensetzung

| | |
|---|---|
| $SiO_2$ | 39,1 Gew.-% |
| $Al_2O_3$ | 1 Gew.-% |
| $B_2O_3$ | 16 Gew.-% |
| $Na_2O$ | 6 Gew.-% |
| $K_2O$ | 3 Gew.-% |
| $Li_2O$ | 3 Gew.-% |
| BaO | 21 Gew.-% |
| CaO | 4 Gew.-% |
| ZnO | 1 Gew.-% |
| $P_2O_5$ | 0,5 Gew.-% |

6

| | |
|---|---|
| CoO | 0,7 Gew.-% |
| NiO | 2,5 Gew.-% |
| CuO | 0,5 Gew.-% |

aus üblichen Rohstoffen erschmolzen und durch Ausgießen in ein Wasserbad granuliert. Das Wasserbad enthielt so viel β-D-Fructofuranosyl-α-D-glucopyranosid gelöst, daß auf der getrockneten Fritte (Granulate) 0,01 Gew.-% des Zusatzes haftete.

Anschließend wurden 70 Gew.-Teile dieser Fritte und 30 Gew.-Teile der Fritte A, die mit 0,02 Gew.-Teilen Mannit beschichtet war, zusammen mit

15 Gew.-Teilen $SiO_2$ (Quarz)
3 Gew.-Teilen Ton
0,1 Gew.-Teilen $NaNO_2$
0,3 Gew.-Teilen $NaAlO_2$
0,1 Gew.-Teilen $Na_4B_2O_7 \cdot 10\ H_2O$
0,5 Gew.-Teilen Ca-Silikathydrat

und 45 Gew.-Teilen Wasser in einer Kugelmühle bis zu einer Mahlfeinheit, die durch einen Rückstand von weniger als 3 Gew.-% auf einem Sieb von 10 000 Maschen/cm² (244 mesh) definiert ist, gemahlen.

Der Schlicker wurde auf ein in üblicher Weise entfettetes Stahlblech aufgespritzt. Das Stahlblech hatte eine Decke von 2 mm und war mit einem Biegeradius von 2 mm um 90° umgebogen.

Anschließend wurde das Deckemail entsprechend den Beispielen 1 bis 6 in der dort beschriebenen Weise aufgebracht und eingebrannt. Es wurde eine fehlerfreie Emaillierung erhalten, die auch an der Biegekante nicht abplatzte.

**Patentansprüche**

1. Verfahren zur Zwei- und Mehrschichtemaillierung in einem Brand durch aufeinanderfolgenden Naßauftrag von wäßrigen Grund-, gegebenenfalls wäßrigen Zwischen- und Deckemailschlickern und anschließendem gemeinsamem Einbrand, dadurch gekennzeichnet, daß bei der Grund- und gegebenenfalls Zwischenemailschlickerherstellung Saccharide und/oder deren Oxidations- und/oder Reduktionsprodukten und/oder Polyethylenglykol in einer Menge von 0,01 bis 3 Gew.-% — bezogen auf den Emailschlicker — zugegeben werden, wobei die Zusatzstoffe bis zu 50, vorzugsweise bis zu 25, Kohlenstoffatome pro Molekül aufweisen.

2. Verfahren nach Anspruch 1, dadurch gekennzeichnet, daß die Zusatzstoffe mehr als 4, vorzugsweise mehr als 5, Kohlenstoffatome pro Molekül aufweisen.

3. Verfahren nach einem der Ansprüche 1 oder 2, dadurch gekennzeichnet, daß das Grundemailpulver eine Teilchengröße unter 60 μm aufweist.

4. Verfahren nach einem der Ansprüche 1 bis 3, dadurch gekennzeichnet, daß ein Grundemail folgender Zusammensetzung eingesetzt wird :

| | | |
|---|---|---|
| $SiO_2$ | 30-50 Gew.-% | Summe 33-53 Gew.-% |
| $ZrO_2$ | 0- 8 Gew.-% | |
| | | |
| $B_2O_3$ | 5-21 Gew.-% | |
| BaO | 14-25 Gew.-% | Summe 33-40 Gew.-% |
| ZnO | 0- 5 Gew.-% | |
| F | 0- 4 Gew.-% | |
| | | |
| Alkalioxide | 10-15 Gew.-% | |
| | | |
| Haftoxide | 1- 4 Gew.-% | |
| | | |
| CaO | 0- 5 Gew.-% | |
| SrO | 0- 5 Gew.-% | |
| $TiO_2$ | 0- 5 Gew.-% | Summe  0- 7 Gew.-% |
| $Fe_2O_3$ | 0- 5 Gew.-% | |
| $P_2O_5$ | 0- 2 Gew.-% | |

5. Emailfritte zur Zwei- und Mehrschichtemaillierung in einem Brand, dadurch gekennzeichnet, daß die Fritte auf der Oberfläche zumindest teilweise mit Sacchariden und/oder deren Oxidations- und/oder Reduktionsprodukten und/oder Polyethylenglykol in Mengen von bis zu 3 Gew.-% — bezogen auf die Fritte — beschichtet ist, wobei die Beschichtungssubstanzen bis 50, vorzugsweise bis zu 25, Kohlenstoffatome pro Molekül aufweisen.

6. Emailfritte nach Anspruch 5, dadurch gekennzeichnet, daß die Beschichtungssubstanzen in Mengen von 0,006 bis 1,8 Gew.-%, besonders bevorzugt 0,006 bis 0,3 Gew.-%, bezogen auf die Fritte, vorhanden sind.

7. Emailfritte nach einem der Ansprüche 5 oder 6, gekennzeichnet durch eine Zusammensetzung (ohne Beschichtung) von

| | | |
|---|---|---|
| $SiO_2$ | 30-50 Gew.-% | Summe 33-53 Gew.-% |
| $ZrO_2$ | 0- 8 Gew.-% | |
| $B_2O_3$ | 5-21 Gew.-% | |
| BaO | 14-25 Gew.-% | Summe 33-40 Gew.-% |
| ZnO | 0- 5 Gew.-% | |
| F | 0- 4 Gew.-% | |
| Alkalioxide | 10-15 Gew.-% | |
| Haftoxide | 1- 4 Gew.-% | |
| CaO | 0- 5 Gew.-% | |
| SrO | 0- 5 Gew.-% | |
| $TiO_2$ | 0- 5 Gew.-% | Summe 0- 7 Gew.-% |
| $Fe_2O_3$ | 0- 5 Gew.-% | |
| $P_2O_5$ | 0- 2 Gew.-% | |

**Claims**

1. Process for two-layer and multi-layer enamelling in one firing by the successive wet application of aqueous ground enamel slips, optionally aqueous intermediate enamel slips and cover enamel slips and subsequent combined firing-on, characterised in that saccharides and/or their oxidation and/or reduction products and/or polyethylene glycol are added, in a quantity of 0.01 to 3 % by weight — based on the enamel slip —, during the preparation of the ground enamel slip and optional intermediate enamel slip, the additives containing up to 50, preferably up to 25, carbon atoms per molecule.

2. Process according to Claim 1, characterised in that the additives contain more than 4, preferably more than 5, carbon atoms per molecule.

3. Process according to one of Claims 1 or 2, characterised in that the ground enamel powder has a particle size of less than 60 $\mu$m.

4. Process according to one of Claims 1 to 3, characterised in that a ground enamel of the following composition is used :

| | | |
|---|---|---|
| $SiO_2$ | 30-50 % by weight | total 33-53 % by weight |
| $ZrO_2$ | 0- 8 % by weight | |
| $B_2O_3$ | 5-21 % by weight | |
| BaO | 14-25 % by weight | total 33-40 % by weight |
| ZnO | 0- 5 % by weight | |
| F | 0- 4 % by weight | |
| alkali metal oxides | 10-15 % by weight | |
| adhesive oxides | 1- 4 % by weight | |
| CaO | 0- 5 % by weight | |
| SrO | 0- 5 % by weight | |
| $TiO_2$ | 0- 5 % by weight | total 0- 7 % by weight |
| $Fe_2O_3$ | 0- 5 % by weight | |
| $P_2O_5$ | 0- 2 % by weight | |

5. Enamel frit for two-layer and multi-layer enamelling in one firing, characterised in that the surface of the frit is at least partially coated with saccharides and/or their oxidation and/or reduction products and/or polyethylene glycol, in quantities of up to 3 % by weight — based on the frit —, the coating substances having up to 50, preferably up to 25, carbon atoms per molecule.

6. Enamel frit according to Claim 5, characterised in that the coating substances are present in quantities of 0.006 to 1.8 % by weight, particularly preferably 0.006 to 0.3 % by weight, based on the frit.

7. Enamel frit according to one of Claims 5 or 6, characterised by a composition (without coating) of

| | | |
|---|---|---|
| SiO$_2$ | 30-50 % by weight | total 33-53 % by weight |
| ZrO$_2$ | 0- 8 % by weight | |
| B$_2$O$_3$ | 5-21 % by weight | |
| BaO | 14-25 % by weight | total 33-40 % by weight |
| ZnO | 0- 5 % by weight | |
| F | 0- 4 % by weight | |
| alkali metal oxides | 10-15 % by weight | |
| adhesive oxides | 1- 4 % by weight | |
| CaO | 0- 5 % by weight | |
| SrO | 0- 5 % by weight | |
| TiO$_2$ | 0- 5 % by weight | total  0- 7 % by weight |
| Fe$_2$O$_3$ | 0- 5 % by weight | |
| P$_2$O$_5$ | 0- 2 % by weight | |

**Revendications**

1. Procédé pour l'émaillage en deux et plusieurs couches et en un feu par application successive au mouillé de barbotines aqueuses d'émail de fond, le cas échéant d'émail intermédiaire et d'émail de couverture et cuisson subséquente en commun, caractérisé en ce que l'on ajoute à la préparation de la barbotine d'émail de fond et le cas échéant de la barbotine d'émail intermédiaire des saccharides et/ou leurs produits d'oxydation et/ou de réduction et/ou un polyéthylène-glycol en quantité de 0,01 à 3 % en poids, par rapport à la barbotine d'émail, ces additifs contenant jusqu'à 50 et de préférence jusqu'à 25 atomes de carbone par molécule.

2. Procédé selon la revendication 1, caractérisé en ce que les additifs contiennent plus de 4 et de préférence plus de 5 atomes de carbone par molécule.

3. Procédé selon l'une des revendications 1 ou 2, caractérisé en ce que la poudre d'émail de fond a une dimension de particule inférieure à 60 microns.

4. Procédé selon l'une des revendications 1 à 3, caractérisé en ce que l'on utilise un émail de fond à la composition suivante :

| | | |
|---|---|---|
| SiO$_2$ | 30 à 50 % en poids | total 33 à 53 % en poids |
| ZrO$_2$ | 0 à  8 % en poids | |
| B$_2$O$_3$ | 5 à 21 % en poids | |
| BaO | 14 à 25 % en poids | total 33 à 40 % en poids |
| ZnO | 0 à  5 % en poids | |
| F | 0 à  4 % en poids | |
| Oxydes alcalins | 10 à 15 % en poids | |
| Oxydes d'adhérence | 1 à  4 % en poids | |
| CaO | 0 à  5 % en poids | |
| SrO | 0 à  5 % en poids | |
| TiO$_2$ | 0 à  5 % en poids | total  0 à  7 % en poids |
| Fe$_2$O$_3$ | 0 à  5 % en poids | |
| P$_2$O$_5$ | 0 à  2 % en poids | |

5. Fritte d'émail pour l'émaillage en deux et plusieurs couches et en un feu caractérisée en ce que la fritte est revêtue en surface, en partie au moins, de saccharides et/ou de leurs produits d'oxydation et/ou de réduction et/ou d'un polyéthylène-glycol en quantité allant jusqu'à 3 % du poids de la fritte, les substances du revêtement contenant jusqu'à 50 et de préférence jusqu'à 25 atomes de carbone par molécule.

6. Fritte d'émail selon la revendication 5, caractérisée en ce que les substances du revêtement sont présentes en quantités de 0,006 à 1,8 % en poids et de préférence de 0,006 à 0,3 % en poids, par rapport à la fritte.

7. Fritte d'émail selon l'une des revendications 5 ou 6, caractérisée par une composition (sans le

revêtement) de :

| | | |
|---|---|---|
| $SiO_2$ | 30 à 50 % en poids | total 33 à 53 % en poids |
| $ZrO_2$ | 0 à 8 % en poids | |
| $B_2O_3$ | 5 à 21 % en poids | |
| $BaO$ | 14 à 25 % en poids | total 33 à 40 % en poids |
| $ZnO$ | 0 à 5 % en poids | |
| F | 0 à 4 % en poids | |
| Oxydes alcalins | 10 à 15 % en poids | |
| Oxydes d'adhérence | 1 à 4 % en poids | |
| $CaO$ | 0 à 5 % en poids | |
| $SrO$ | 0 à 5 % en poids | |
| $TiO_2$ | 0 à 5 % en poids | total 0 à 7 % en poids |
| $Fe_2O_3$ | 0 à 5 % en poids | |
| $P_2O_5$ | 0 à 2 % en poids | |